Europäisches Patentamt

European Patent Office

Office européen des brevets

(11) Veröffentlichungsnummer: **0 223 993**

**A1**

(12) **EUROPÄISCHE PATENTANMELDUNG**

(21) Anmeldenummer: 86114024.2

(22) Anmeldetag: 09.10.86

(51) Int. Cl.4: **A22C 15/00** , B65G 47/00

(30) Priorität: 12.10.85 DE 3536460

(43) Veröffentlichungstag der Anmeldung:
03.06.87 Patentblatt 87/23

(84) Benannte Vertragsstaaten:
AT BE CH ES FR GB IT LI LU NL SE

(71) Anmelder: Karl Schnell GmbH & Co.
Maschinenfabrik
Mühlstrasse 30
D-7065 Winterbach(DE)

(72) Erfinder: Schnell, Karl
Mühlstrasse 28
D-7065 Winterbach(DE)
Erfinder: Domiatil, Miroslav
Remsstrasse 127
D-7060 Schorndorf(DE)

(74) Vertreter: Schmid, Berthold
Patentanwälte Dipl.-Ing. B. Schmid Dr. Ing. G.
Birn Falbenhennenstrasse 17
D-7000 Stuttgart 1(DE)

(54) Aufhängevorrichtung für Wurstketten.

(57) Um eine völlig selbsttätige Abnahme von Wurstketten (6) von einer Zuführvorrichtung (3, 4) und Abgabe an Rauchstäbe (11) zu erreichen, sind Haken (7) an einer umlaufenden laufenden Kette (8) in ihrer Längsachse drehbar und quer zur Kettenlängsrichtung schwenkbar gelagert. Durch entsprechende Steuerungsvorrichtungen in Form eines Drehhebels (18), der mit einer Steuerkante (20) und einer Scheibe (23) zusammenwirkt, und eines klotzförmigen Führungsgliedes (19), welches auf einer Führungsschiene (21) aufliegt, wird der Haken (7) in seine verschiedenen Stellungen bewegt. Dabei befindet sich der Haken (7) bei der Aufnahme der einzelnen Schlingen der Wurstkette (6) in seiner untersten Schwenkstellung, und das umgebogene Hakenende (16) ist in Transportrichtung nach vorne gerichtet und untergreift eine Schlinge. In die Abgabelage wird der Haken (7) durch die Rauchstäbe (11), welche die Wurstkette (6) abnehmen, nach oben bewegt und dreht sich dabei so um seine Längsachse, daß das Hakenende (16) nach unten gerichtet ist und die Wurstkette (6) freigibt.

Fig.3
Schnitt C-C

## Aufhängevorrichtung für Wurstketten

Die Erfindung bezieht such auf eine Aufhängevorrichtung für Wurstketten mit einer umlaufenden Endloskette, -band od. dgl. Eine solche Vorrichtung ist bereits aus der US-PS 3 353 495 bekannt. Dabei sind an der Endloskette in entsprechenden Abständen Haken um ihre eigene Achse drehbar gelagert. Durch die Einwirkung von auf ihnen angeordneten Federn ragen sie jeweils in eine vorbestimmte Richtung. In dieser Lage untergreifen sie Wurstketten, die beispielsweise von einer Abdrehvorrichtung zugeführt werden. Mittels eines Räucherstabes erfolgt dann die Abnahme der Wurstketten, wobei sich die Haken infolge der Einwirkung der Räucher stäbe so drehen, daß die Wurstkette an den Stab übergeben wird. Als Nachteil hat sich bei einer solchen Vorrichtung erwiesen, daß diese nur bei einer horizontalen Umlaufebene der Hakenkette verwendet können. Außerdem reicht die Drehbewegung der Haken alleine vielfach nicht aus, um ein einwandfreies Lösen der Wurstkette vom Haken zu erreichen. Es kann daher vorkommen, daß Teile der Wurstkette noch am Haken hängenbleiben und von Hand auf den Rauchstab übergeschoben werden müssen. Derartige Vorrichtungen sind daher für den vollautomatischen Ablauf nicht geeignet.

Die Aufgabe der vorliegenden Erfindung ist es, eine Aufhängevorrichtung der oben beschriebenen Art zu schaffen, bei welcher nicht nur die Übergabe vom Abdrehgerät auf die Vorrichtung, sondern auch von dieser auf den Rauchstab ohne jeden Handgriff völlig selbsttägig erfolgen kann. Dies wird bei einer Vorrichtung mit um ihre Längsachse drehbar gelagerten Haken erfindungsgemäß dadurch erreicht, daß die Haken zusätzlich etwa quer zur Kettenlängsrichtung schwenkbar angeordnet sind, wobei Steuerungseinrichtungen zur Schwenkung und Drehung der Haken in eine Aufnahme-und eine Ablagestellung vorgesehen sind. Durch die gleichzeitige Dreh-und Schwenkbarkeit der Haken können eindeutig definierte Aufnahme-und Ablagestellungen erreicht werden, so daß mit Sicherheit ein Hängenbleiben einzelner Teile der Wurstkette vermieden wird. Außerdem können, wie bei der oben beschriebenen bekannten Vorrichtung, besonders einfache Haken Verwendung finden, die am freien Ende lediglich eine Abbiegung um etwa 90° aufweisen.

Die dreh-und schwenkbare Befestigung der Haken an der Kette erfolgt vorzugsweise durch Zwischenschaltung eines Lagerbockes, welche, um ein Durchhängen der Kette zu vermeiden, längs derselben auf einer Auflageschiene geführt sind.

Zur Steuerung des Hakens weist dieser zwischen seinem freien und seinem angelenkten Ende ein mit einer längs der Kette angeordneten Führungsschiene zusammenwirkendes Führungsglied auf. Durch die Führungsschiene kann unter anderem die Schwenklage des Hakens eingehalten bzw. verändert werden. Besonders zweckmäßig ist die Ausbildung des Führungsgliedes als Klotz, dessen Längsachse etwa parallel zum abgebogenen Hakenende verläuft.

Als weiteres Steuerungsmittel ist hinter dem angelenkten Ende des Hakens ein Drehhebel unverdrehbar befestigt, welcher mit einer Steuerkante des Lagerbockes so zusammenwirkt, daß bei Anheben des freien Hakenendes eine Drehung des Hakens um seine Längsachse um etwa 90° erfolgt. Für bestimmte Zwecke kann es günstig sein, wenn der Lagerbock einen mit dem Drehhebel zusammenwirkenden Anschlag für die Schwenkbewegung des Hakens aufweist. Der Drehhebel erstreckt sich vorzugsweise in die entgegengesetzte Richtung des umgebogenen Hakenendes.

Nach einem weiteren Merkmal der Erfindung ist am aufnahmeseitigen Kettenwendepunkt eine oberhalb der Lagerböcke für die Haken angeordnete Scheibe vorgesehen, welche als Schwenkanschlag und als Führung für den Drehhebel des Hakens ausgebildet ist. Jeweils, wenn der Drehhebel eines Hakens auf die Scheibe aufläuft, wird er nach unten geschwenkt, wodurch sich der Haken in die Aufnahmestellung bewegt und in dieser Lage zumindest so lange gehalten wird, bis der Drehhebel den Einflußbereich der Scheibe verlassen hat. Durch diese Drehung des Hakens um seine Längsachse wird gleichzeitig das Führungsglied in eine zur Führungsschiene parallele Lage gedreht, so daß der Haken in seine untere Aufnahmestellung schwenkt.

Das Kettenantriebsritzel wird über ein Klinkenrad mit Klinke von einem insbesondere pneumatischen Hubzylinder absatzweise angetrieben. Dabei erfolgt jedesmal eine Weiterschaltung der Kette um einen Hakenabstand. Die Steuerung des Antriebes erfolgt zweckmäßigerweise entweder über die Füllmaschine oder durch die Abdrehvorrichtung. Auch die Abnahme mittels der Rauchstäbe erfolgt völlig selbsttätig durch eine am zur Wurstaufnahme entgegengesetzten Ende der Aufhängevorrichtung angeordnete Hubvorrichtung für die Rauchstäbe. Sobald eine Wurstkette fertig ist, fährt der entsprechende Rauchstab nach oben, nimmt hierbei die Wurstkette von den Haken ab, wobei er diese nach oben schwenkt. Da bei dieser Schwenkbewegung durch den Drehhebel gleichzeitig eine Drehung des Hakens um seine Längsachse erfolgt, rutscht die Wurstkette zwangsläufig von den Hakenenden ab, wobei ein Hängenbleiben einzelner Wurstkettenteile völlig ausgeschlossen ist. Vorzugsweise sind für die Rauchstäbe noch ein Magazin mit Transportband und eine Abstransportvorrichtung vorgesehen.

Die Zeichnung zeigt ein Ausführungsbeispiel der Erfindung. Es stellen dar:

Fig. 1 eine Seitenansicht einer Anlage, bestehend aus einer Füllmaschine, einer Abdrehvorrichtung und einer Aufhängevorrichtung,

Fig. 2 eine Vorderansicht der Aufhängevorrichtung,

Fig. 3 den Schnitt C-C nach Fig. 1 in vergrößertem Maßstab mit strichpunktiert eingezeichneten weiteren Lagen des Hakens,

Fig. 4 die Ansicht X nach Fig. 3,

Fign. 5 u. 6 Ausschnitte aus Fig. 3 mit verschiedenen Querschnittformen des Hakens.

Das nicht dargestellte Brät wird im Wagen 1 zur Hubvorrichtung 2 gefahren und von dieser, wie die strichpunktierte Darstellung des Wagens zeigt, in die Füllmaschine 3 gekippt. Von dieser wird das Brät in die Portionier-und Abdrehvorrichtung 4 weitergeführt. Diese Vorrichtung stößt die Würste in Kettenform aus und gibt sie an die Aufhängevorrichtung 5 ab. Dabei wird die Wurstkette mit nach unten hängenden Schlaufen wendelartig an Haken 7 aufgehängt, welche an einer Endloskette 8 gelagert sind. An dem der Aufnahmeseite 9 entgegensetzten Ende 10 der Aufhängevorrichtung 5 werden dann die Wurstketten 6 von den Rauchstäben 11 abgenommen.

Die Kette 8 ist am aufnahmenseitigen Ende 9 des Aufhängegerätes 5 um ein Kettenantriebsritzel 12 geführt und an der gegenüberliegenden Seite 10 findet sich ein entsprechendes nicht näher dargestelltes Umlenkkettenrad. Der Antrieb des Kettenritzels 12 erfolgt in nicht dargestellter Weise über einen pneumatischen Hubzylinder, welcher eine Klinke betätigt, die ihrerseits in ein mit dem Kettenritzel 12 verbundenes Klinkenrad eingreift. Auf diese Weise erfolgt ein taktweiser Antrieb der Kette 8, wobei jeweils um den Abstand zwischen zwei Haken 7 weitergeschaltet wird. Die Steuerung des Antriebes erfolgt dabei entweder von der Füllmaschine 3 oder der Abdrehvorrichtung 4. Für die Kette ist außerdem noch eine besondere Führung 13 vorgesehen.

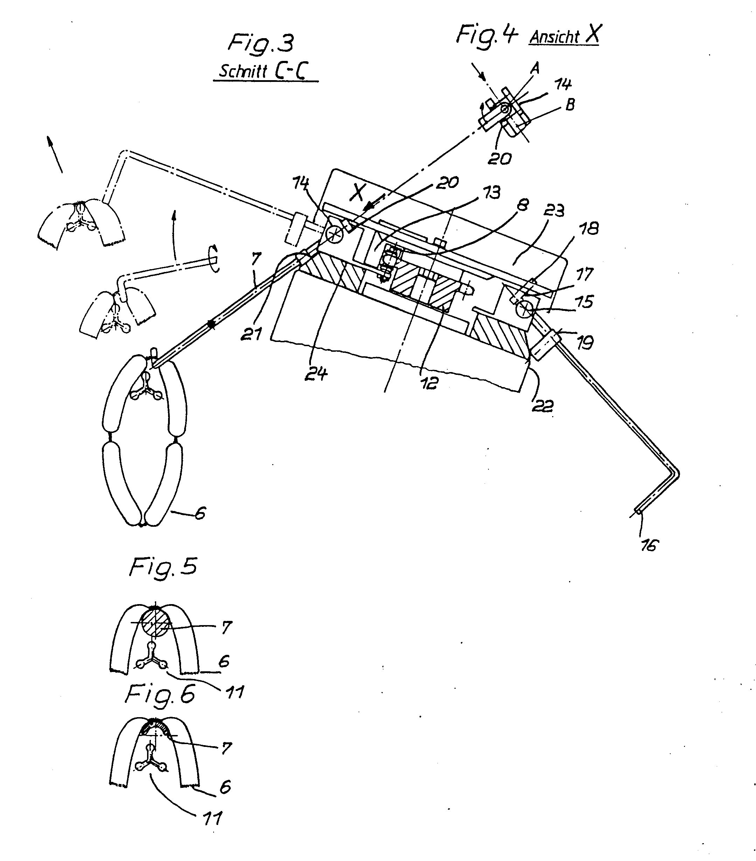

An der Kette 8 ist für jeden Haken ein Lagerbock 14 vorgesehen, dessen Aufbau sich, insbesondere aus den Figuren 3 und 4 ergibt. An jedem Lagerbock 14 ist ein Bolzen 15 drehbar gelagert, der mit einer Querbohrung versehen ist. In dieser Querbohrung ist um seine Längsachse drehbar der Haken 7 angeordnet. Dieser kann damit gegenüber dem Lagerbock 14 bzw. der Kette 8 geschwenkt und gedreht werden. Das Hakenende 15 ist einfach um 90° gegenüber dem Haken 7 abgebogen. Außerdem weist der Haken 7 an seinem dem Hakenende 16 gegenüberliegenden Hakenende 17 einen Drehhebel 18 und zwischen dem Bolzen 15 und dem Hakenende 16 ein Führungsglied 19 auf, welches als Klotz ausgebildet ist. Der Drehhebel 18 wirkt mit einer Steuerkante 20 so zusammen, daß bei einem Anheben des Hakens 7 gleichzeitig eine Drehung um seine Längsachse erfolgt, wobei sich der Drehhebel 18 aus der in Fig. 3 links dargestellten Lage in die rechts gezeichnete bewegt. Da sich der Drehhebel 18 in die entgegengesetzte Richtung wie das Hakenende 16 erstreckt, ist dann das Hakenende 16 nach unten gerichtet. Das Führungsglied 19 stützt sich auf einer sich längs der Kette 8 erstreckenden Führungsschiene 21 ab und wird bei Drehung um die Längsachse des Hakens 7 von der in Fig. 3 links gezeichneten in die rechts gezeichnete Lage geschwenkt. Dabei verläuft die Längsachse 22 etwa in Richtung des Hakenendes 16. Oberhalb des Kettenantriebsritzels 12 und vor allem oberhalb der Lagerböcke 14 ist eine Scheibe 23 vorgesehen, welche mit dem Drehhebel 18 zusammenwirkt.

Die Arbeitsweise der Aufhängevorrichtung 5 ist die folgende. Wie der in Fig. 3 links dargestellte voll ausgezogene Haken zeigt, befindet sich der Haken in seiner untersten Schwenklage und das Hakenende 16 ist in Bewegungsrichtung der Kette 8 nach vorne gerichtet, so daß also die entsprechende Schlinge der Wurstkette untergriffen und mitgenommen wird. Durch das Aufliegen des klotzartigen Führungsgliedes 19 auf der Führungsschiene 21 verbleibt der Haken 7 in dieser Lage. Sobald eine Wurstkette 6 vollständig aufgehängt ist, wird der Kettentransport 8 abgestoppt. Dieser Zeitraum wird zusätzlich ausgenutzt, um eine neue nicht darge stellte Darmraupe auf die Abdrehvorrichtung 4 aufzuziehen. Gleichzeitig wird der zwischen den Schlingen der Wurstkette 6 liegende Rauchstab 11 nach außen oben bewegt, wobei er die Schlinge der Wurstkette 6 untergreift und anhebt. Dadurch wird auch der Haken 7 in die in Fig. 3 dargestellte erste Zwischenstellung geschwenkt, so daß sich das Führungsglied 19 von der Führungsschiene 21 abhebt. Der Drehhebel 18, der sich an der Steuerkante 20 abstützt, wird bei dieser Bewegung in die obere in Fig. 3 strichpunktiert dargestellte Lage geschwenkt, so daß das Hakenende 16 nach unten zeigt und die entsprechende Schlinge der Wurstkette 6 freigibt. Anschließend erfolgt wieder ein Absenken, wobei sich das Führungsglied 19 nunmehr in senkrechter Lage auf der Führungsschiene 21 abstützt, bis beim Rücklauf der Drehhebel 18 auf die Scheibe 23 aufläuft. Dadurch erfolgt wiederum eine Rückdrehung des Hakens, das Führungsglied 19 liegt wieder flach auf der Führungsschiene 21 auf und die nächste Wurstkette kann ergriffen werden. Um ein Durchhängen der Kette 8 zu vermeiden, stützten sich die Lagerböcke 15 auf eine Auflageschiene 24 ab, die aus einem Stück mit der Führungsschiene 21 besteht.

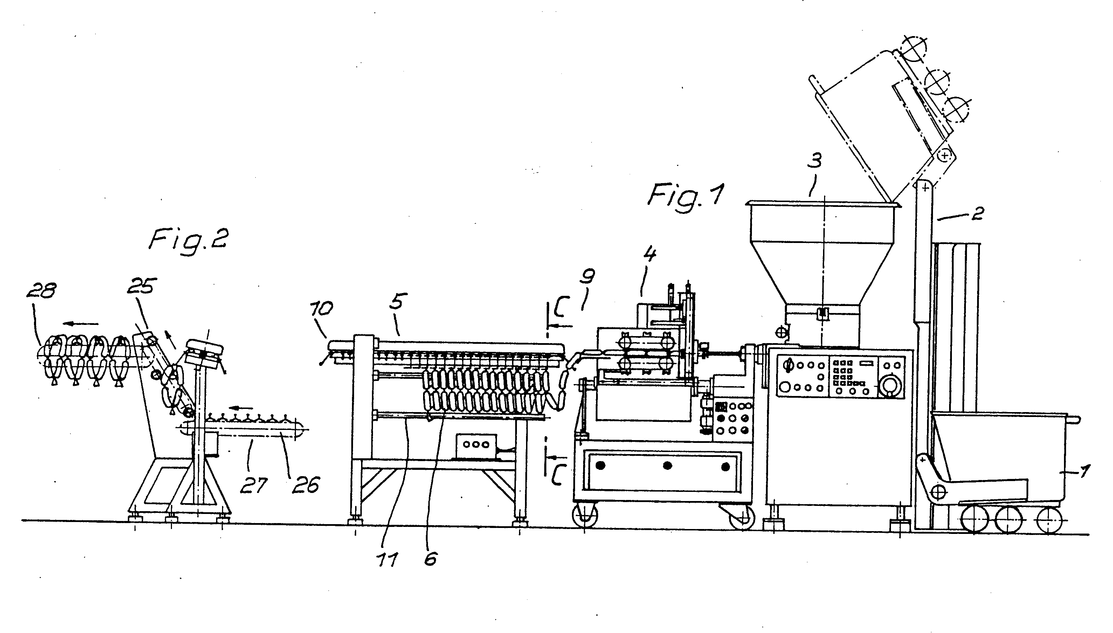

Wie sich aus Fig. 2 ergibt, erfolgt auch die Abnahme durch die Rauchstäbe 11 vollautomatisch. Hierzu ist eine Hubvorrichtung 25 für die Rauchstäbe 11 vorgesehen, welche diese nach schräg oben außen anhebt, so daß, wie oben beschrieben, die Wurstkette 6 von den Haken 7 abgenommen werden kann. Im unteren Teil ist ein Rauchstabmagazin 26 vorgesehen, das ein Transportband 27 auf weist, welches die Rauchstäbe 11 der Hubvorrichtung 25 zuführt. Im oberen Teil ist ein weiteres Transportband 28 angeordnet, welches zur Aufnahme der mit den Wurstketten beladenen Rauchstäben 11 dient.

Die Fign. 5 und 6 zeigen unterschiedliche Querschnittsformen der Haken, wobei in Fig. 5 ein kreisrunder Querschnitt gewählt wurde, während in Fig. 6 der Querschnitt bügelförmig gestaltet ist.

## Ansprüche

1. Aufhängevorrichtung (5) für Wurstketten (6) mit einer unlaufenden Endloskette, -band od. dgl. - (8) und daran um ihre Längsachse drehbar gelagerten Haken (7), dadurch gekennzeichnet, daß die Haken (7) etwa quer zur Kettenlänsrichtung - schwenkbar angeordnet sind, wobei Steuerungseinrichtungen (18, 19, 20, 21, 23) zur Schwenkung und Drehung der Haken (7) in eine Aufnahme-und eine Abgabestellung vorgesehen sind.

2. Vorrichtung nach Anspruch 1, dadurch gekennzeichnet, daß die Haken (7) an ihren freien Enden eine einfache Abbiegung (16) um etwa 90° aufweisen.

3. Vorrichtung nach einem oder beiden der Ansprüche 1 bis 2, dadurch gekennzeichnet, daß an der Kette (8) ein Lagerbock (14) befestigt ist, an welchem die Haken (7) in sich drehbar und - schwenkbar angeordnet sind.

4. Vorrichtung nach Anspruch 3, dadurch gekennzeichnet, daß längs der Kette (8) eine Auflageschiene (24) für die Lagerböcke (14) vorgesehen ist.

5. Vorrichtung nach einem oder mehreren der vorhergehenden Ansprüche, dadurch gekennzeichnet, daß die Haken (7) zwischen ihren freien (16) und ihren angelenkten Enden (17) ein mit einer längs der Kette (8) angeordneten Führungsschiene (21) zusammenwirkendes Führungsglied (19) aufweisen.

6. Vorrichtung nach Anspruch 5, dadurch gekennzeichnet, daß das Führungsglied (19) als Klotz ausgebildet ist, dessen Längsachse (22) etwa parallel zum abgebogenen Hakenende verläuft.

7. Vorrichtung nach einem oder mehreren der vorhergehenden Ansprüche 3 bis 5, dadurch gekennzeichnet, daß hinter dem angelenkten Ende - (17) des Hakens (7) ein Drehhebel (18) unverdrehbar befestigt ist, welcher mit einer Steuerkante - (20) des Lagerbockes (14) so zusammenwirkt, daß bei Anheben des freien Hakenendes (16) eine Drehung des Hakens (7) um seine Längsachse um etwa 90° erfolgt.

8. Vorrichtung nach Anspruch 7, dadurch gekennzeichnet, daß der Lagerbock (14) einen mit dem Drehhebel (18) zusammenwirkenden Anschlag für die Schwenkbewegung des Hakens (7) aufweist.

9. Vorrichtung nach einem oder beiden der vorhergehenden Ansprüchen 7 bis 8, dadurch gekennzeichnet, daß sich der Drehhebel (18) in die entgegengesetzte Richtung des umgebogenen Hakenendes (16) erstreckt.

10. Vorrichtung nach einem oder mehreren der vorhergehenden Ansprüche 7 bis 9, dadurch gekennzeichnet, daß am aufnahmeseitigen Kettenwendepunkt (9) eine oberhalb der Lagerböcke (14) angeordnete Scheibe (23) vorgesehen ist, welche als Schwenkanschlag und als Führung für den Drehhebel (18) des Hakens (7) ausgebildet ist.

11. Vorrichtung nach einem oder mehreren der vorhergehenden Ansprüche, dadurch gekennzeichnet, daß das Kettenantriebsritzel (12) über ein Klinkenrad mit Klinke von einem, insbesondere pneumatischen, Hubzylinder absatzweise angetrieben wird, wobei jeweils eine Weiterschaltung der Kette (8) um einen Hakenabstand erfolgt.

12. Vorrichtung mit einer Füllmaschine (3) und einer Abdrehvorrichtung (4) dadurch gekennzeichnet, daß die Steuerung des Antriebs der Aufhängevorrichtung (5) von der Füllmaschine (3) oder der Abdrehvorrichtung (4) erfolgt.

13. Vorrichtung nach einem oder mehreren der vorhergehenden Ansprüche, gekennzeichnet durch eine am zur Wurstaufnahme (9) entgegengesetzten Ende (10) angeordnete Hubvorrichtung (25) für Rauchstäbe (11).

14. Vorrichtung nach Anspruch 13, dadurch gekennzeichnet, daß die Hubvorrichtung (25) nach schräg oben außen verläuft.

15. Vorrichtung nach einem oder beiden der vorhergehenden Ansprüche 13 bis 14, dadurch gekennzeichnet, daß die Hubvorrichtung (25) mit einem ein Transportband (27) aufweisenden Rauchstabmagazin (26) und einer Abtransportvorrichtung (28) verbunden ist.

Fig.1

Fig.2

Fig.3
Schnitt C-C

Fig.4 Ansicht X

Fig.5

Fig.6

160 16

## EINSCHLÄGIGE DOKUMENTE

EP 86114024.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 3 021 260 (TOWNSEND ENGINEERING CO.)<br><br>* Seiten 6-9 *<br><br>-- | 1,2 | A 22 C 15/00<br><br>B 65 G 47/00 |
| A | US - A - 3 533 495 (C.H.WALLACE)<br><br>* Spalte 2, Zeile 47 - Spalte 4, Zeile 51 *<br><br>-- | 1,2,13 | |
| A | US - A - 3 430 831 (J.A.BURTON et al.)<br><br>* Spalte 2, Zeile 20 - Spalte 3, Zeile 37 *<br><br>-- | 1,2 | |
| A | DD - A - 91 447 (S.BAYER et al.)<br><br>---- | | |

RECHERCHIERTE SACHGEBIETE (Int. Cl.4)

A 22 C 11/00

A 22 C 15/00

B 65 G 17/00

B 65 G 47/00

Der vorliegende Recherchenbericht wurde für alle Patentansprüche erstellt.

| Recherchenort | Abschlußdatum der Recherche | Prüfer |
|---|---|---|
| WIEN | 15-01-1987 | IRMLER |